Europäisches Patentamt

European Patent Office

Office européen des brevets

(11) Veröffentlichungsnummer: **0 660 326 A2**

# (12) EUROPÄISCHE PATENTANMELDUNG

(21) Anmeldenummer: **94203671.6**

(22) Anmeldetag: **19.12.94**

(51) Int. Cl.⁶: **G11B 23/087**

(30) Priorität: **24.12.93 EP 93203682**

(43) Veröffentlichungstag der Anmeldung:
**28.06.95 Patentblatt 95/26**

(84) Benannte Vertragsstaaten:
**AT DE FR GB IT**

(71) Anmelder: **PHILIPS ELECTRONICS N.V.**
**Groenewoudseweg 1**
**NL-5621 BA Eindhoven (NL)**

(72) Erfinder: **Stöger, Anton**
**c/o Int. Octrooibureau B.V.,**
**Prof. Holstlaan 6**
**NL-5656 AA Eindhoven (NL)**

(74) Vertreter: **Cuppens, Hubertus Martinus Maria**
**INTERNATIONAAL OCTROOIBUREAU B.V.,**
**Prof. Holstlaan 6**
**NL-5656 AA Eindhoven (NL)**

(54) **Verfahren zum Herstellen einer Magnetbandkassette.**

(57) Bei einem Verfahren zum Herstellen einer Magnetbandkassette ($23_2$, $23_2$), wobei in mindestens einen Gehäuseteil (10) des Gehäuses (11) der Magnetbandkassette ($23_1$, $23_2$) eine Gleitfolie ($8_1$, $8_2$) eingesetzt wird, die von einem Gleitfolienstapel (9) vereinzelt wird und die mindestens zwei mit einem Abstand ($a_1$, $b_1$, $a_2$, $b_2$) voneinander angeordnete Erhebungen ($13_1$, $14_1$, $15_1$, $16_1$, $13_2$, $14_2$, $15_2$, $16_2$, ... $13_{2n}$, $14_{2n}$, $15_{2n}$, $16_{2n}$) aufweist, wird die Gleitfolie ($8_1$, $8_2$, ... $8_{2n}$) von einem Gleitfolienstapel (9) vereinzelt, bei dem die gegenseitigen Abstände ($a_1$, $b_1$, $a_2$, $b_2$) der Erhebung: ($13_1$, $14_1$, $15_1$, $16_1$, $13_2$, $14_2$, $15_2$, $16_2$,... $13_{2n}$, $14_{2n}$, $15_{2n}$, $16_{2n}$) von zwei aneinander anliegenden Gleitfolien ($8_1$, $8_2$, $8_3$, $8_4$,... $8_{2n}$) des Gleitfolienstapels (9) entsprechend zwei unterschiedlichen Folienvarianten unterschiedlich groß sind.

FIG.2

Die Erfindung bezieht auf ein Verfahren zum Herstellen einer Magnetbandkasette, wobei in mindestens einen Gehäuseteil des Gehäuses der Magnetbandkassette eine zum Führen eines auf mindestens einen Wickelkern der Magnetbandkasette aufwickelbaren Magnetbandes vorgesehene Gleitfolie eingesetzt wird, die von einem aus einer Vielzahl von Gleitfolien bestehenden Gleitfolienstapel vereinzelt wird und die mindestens zwei mit einem Abstand voneinander angeordnete Erhebungen aufweist.

Weiters bezieht sich die Erfindung auf eine Magnetbandkasette, die nach einem Verfahren gemäß dem vorstehenden ersten Absatz hergestellt ist und die mindestens eine von einem aus einer Vielzahl von Gleitfolien bestehenden Gleitfolienstapel vereinzelte Gleitfolie aufweist, die mindestens zwei mit einem Abstand voneinander angeordnete Erhebungen aufweist.

Weiters bezieht sich die Erfindung auf einen Gleitfolienstapel zum Verwenden bei einem Verfahren gemäß dem vorstehenden ersten Absatz zum Herstellen einer Magnetbandkasette gemäß dem vorstehenden zweiten Absatz, der aus einer Vielzahl von Gleitfolien besteht, von denen jede Gleitfolie mindestens zwei mit einem Abstand voneinander angeordnete Erhebungen aufweist.

Weiters bezieht sich die Erfindung auf ein Verfahren zum Herstellen eines Gleitfolienstapel gemäß der im vorstehenden dritten Absatz angeführten Gattung, wobei eine Vielzahl von Gleitfolien mit mindestens zwei mit einem Abstand voneinander angeordneten Erhebungen hergestellt werden und durch Stapeln dieser Gleitfolien der Gleitfolienstapel hergestellt wird.

Ein Verfahren zum Herstellen einer Magnetbandkasette gemäß der im vorstehenden ersten Absatz angeführten Gattung ist bekannt. Bei diesem bekannten Verfahren werden die Gleitfolien von einem Gleitfolienstapel vereinzelt, bei dem jede Gleitfolie nur zwei geradlinig verlaufende rinnen- bzw. gewölbeartige Erhebungen aufweist und die beiden rinnen- bzw. gewölbeartigen Erhebungen der Gleitfolien bei allen Gleitfolien nominal denselben Abstand voneinander aufweisen. Aufgrund dieses Sachverhaltes liegen bei dem bekannten Verfahren sämtliche Gleitfolien über ihren gesamten Flächenbereich satt aneinander an, wodurch es beim Vereinzeln der Gleitfolien, was vor dem Einsetzen der Gleitfolien in eine Magnetbandkassette beim Herstellen einer solchen Magnetbandkassette erfolgt, zu Problemen kommen kann, weil zwischen den über ihren gesamten Flächenbereich satt aneinander anliegenden Gleitfolien ein sogenannter Glasplatteneffekt auftreten kann, wodurch bei dem bekannten Verfahren der unerwünschte Fall eintritt, daß anstelle von nur einer Gleitfolie mehr als eine Gleitfolie von dem Gleitfolienstapel weggenommen und in eine Magnetbandkassette eingesetzt werden. Dies führt bei dem bekannten Verfahren zum Herstellen einer Magnetbandkasette dazu, daß eine funktionsuntüchtige bzw. zumindest funktionsgestörte oder funktionsbeeinträchtigte Magnetbandkassette erhalten wird, was nachteilig und unerwünscht ist.

Eine Magnetbandkassette gemäß der im vorstehenden zweiten Absatz angeführten Gattung ist ebenfalls bekannt. Von dieser bekannten Magnetbandkassette, die zwei im wesentlichen parallel zu den Kassettenhauptwänden angeordnete Gleitfolien zur Führung der Bandkanten des zwischen zwei nebeneinander liegenden Wickelkernen verlaufenden Magnetbandes im Bereich des Bandwickels aufweist, gibt es hinsichtlich der Ausbildung der Gleitfolien nur eine einzige Kassettenvariante, da - entsprechend dieser einen Kassettenvariante - jede Gleitfolie nur zwei geradlinig verlaufende rinnen- bzw. gewölbeartige Erhebungen aufweist und die Abstände der beiden rinnen- bzw. gewölbeartigen Erhebungen der Gleitfolien bei allen Gleitfolien nominal gleich groß sind.

Ein Gleitfolienstapel gemäß der im vorstehenden dritten Absatz angeführten Gattung ist ebenfalls bekannt. Dieser bekannte Gleitfolienstapel besteht aus Gleitfolien gemäß nur einer einzigen Folienvariante, wobei jede Gleitfolie nur zwei geradlinig verlaufende rinnen- bzw. gewölbeartige Erhebungen aufweist und die Abstände der beiden rinnen- bzw. gewölbeartigen Erhebungen der Gleitfolien bei sämtlichen Gleitfolien des Gleitfolienstapels nominal gleich groß sind.

Ein Verfahren zum Herstellen eines Gleitfolienstapels gemäß der im vorstehenden vierten Absatz angeführten Gattung ist ebenfalls bekannt. Bei diesem bekannten Verfahren zum Herstellen eines Gleitfolienstapels werden nur Gleitfolien gemäß einer einzigen Folienvariante zur Bildung da Gleitfolienstapels gestapelt, wobei bei allen Gleitfolien dieser einzigen Folienvariante nur zwei geradlinig verlaufende rinnen- bzw. gewölbeartige Erhebungen vorgesehen sind und die Abstände der beiden rinnen- bzw. gewölbeartigen Erhebungen der Gleitfolien nominal gleich groß sind.

Die Erfindung hat sich zur Aufgabe gestellt, bei einem Verfahren zum Herstellen einer Magnetbandkassette gemäß der im vorstehenden ersten Absatz angeführten Gattung die vorstehend angeführten Schwierigkeiten zu vermeiden und ein verbessertes Verfahren zu schaffen, bei dem ein einwandfreies Vereinzeln der Gleitfolien von dem Gleitfolienstapel beim Herstellen von Magnetbandkassetten gewährleistet ist. Hierfür ist die Erfindung dadurch gekennzeichnet, daß die Gleitfolie von einem Gleitfolienstapel vereinzelt wird, der aus Gleitfolien gemäß mindestens zwei unterschiedlichen Folienvarianten besteht, welche Folienvarianten sich in den Abständen zwischen mindestens zwei Erhebungen voneinander unterscheiden, und bei dem die Abstände zwischen mindestens zwei Erhebungen von zwei aneinander anliegenden Gleitfolien des Gleitfolienstapels entsprechend zwei unterschiedlichen Folienvarianten unterschiedlich groß sind. Auf diese Weise ist erreicht, daß zumindest die im obersten Bereich eines Gleitfolienstapels befindlichen Gleitfolien aufgrund der abstandsmäßig zueinanderversetzten Erhebungen von zwei aneinander anliegenden Gleitfolien nicht über ihren gesamten Flächenbereich satt aneinander anliegen, sondern daß durch die abstandsmäßig zueinander versetzte Anordnung der Erhebungen mit Hilfe dieser Erhebungen ein Federeffekt erhalten wird, durch den zumindest die oberste Gleitfolie von der darunterliegenden Gleitfolie etwas abgehoben wird, so daß ein stets einwandfreies Vereinzeln der obersten Gleitfolie von dem Gleitfolienstapel gewährleistet ist und folglich bei dem Verfahren zum Herstellen einer Magnetbandkassette eine durch Einsetzen von mehr als nur einer erwünschten Gleitfolie fehlerhafte Kassettenherstellung vermieden ist.

Bei dem erfindungsgemäßen Verfahren zum Herstellen einer Magnetbandkassette hat sich als besonders vorteilhaft erwiesen, wenn die Gleitfolie von einem Gleitfolienstapel vereinzelt wird, bei dem die Differenz aus den Abständen zwischen mindestens zwei Erhebungen von zwei aneinander anliegenden Gleitfolien des Gleitfolienstapels im Bereich von 0,2 mm bis 0,6 mm liegt. Eine solche Ausbildung hat sich als in der Praxis am günstigsten erwiesen, weil bei einer solchen Ausbildung nur die obersten Gleitfolien eines Gleitfolienstapels aufgrund des Federeffekts zwischen den abstandsmäßig zueinander versetzten Erhebungen voneinander abgehoben werden, jedoch die darunterliegenden Gleitfolien aufgrund der Druckbelastung durch die darüberliegenden Gleitfolien praktisch gänzlich aneinanderliegen, ohne daß es zu einer nachteiligen Beeinflussung der Ausbildung der Erhebungen kommt. Hierdurch wird trotz des Vorsehens der abstandsmäßig zueinander versetzten Erhebungen eine möglichst geringe Gesamtstapelhöhe erreicht.

Eine erfindungsgemäße Magnetbandkassette ist dadurch gekennzeichnet, daß jede Gleitfolie von einem Gleitfolienstapel vereinzelt ist, der aus Gleitfolien gemäß mindestens zwei unterschiedlichen Folienvarianten besteht, welche Folienvarianten sich in den Abständen zwischen mindestens zwei Erhebungen voneinander unterscheiden, und bei dem die Abstände zwischen mindestens zwei Erhebungen von zwei aneinander anliegenden Gleitfolien des Gleitfolienstapels entsprechend zwei unterschiedlichen Folienvarianten unterschiedlich groß sind, und daß die Magnetbandkassette gemäß mindestens zwei unterschiedlichen Kassettenvarianten ausgebildet ist, von denen eine Kassettenvariante mindestens eine Gleitfolie mit mindestens zwei Erhebungen mit einem vorgegebenen Abstand und von denen eine andere Kassettenvariante mindestens eine Gleitfolie mit mindestens zwei Erhebungen mit einem zu dem einen Abstand unterschiedlichen anderen vorgegebenen Abstand aufweist. Eine solche erfindungsgemäße Magnetbandkassette ist auf einfache Weise mit einem erfindungsgemäßen Verfahren zum Herstellen einer solchen Magnetbandkassette herstellbar.

Bei der erfindungsgemäßen Magnetbandkassette hat sich als besonders vorteilhaft erwiesen, wenn die Differenz aus den Abständen zwischen mindestens zwei Erhebungen der Gleitfolie einer Kassettenvariante und der Gleitfolie der anderen Kassettenvariante im Bereich von 0,2 mm bis 0,6 mm liegt.

Ein erfindungsgemäßer Gleitfolienstapel ist dadurch gekennzeichnet, daß der Gleitfolienstapel aus Gleitfolien gemäß mindestens zwei unterschiedlichen Folienvarianten besteht, welche Folienvarianten sich in den Abständen zwischen mindestens zwei Erhebungen voneinander unterscheiden, und daß die Abstände zwischen mindestens zwei Erhebungen von zwei aneinander anliegenden Gleitfolien des Gleitfolienstapels entsprechend zwei unterschiedlichen Folienvarianten unterschiedlich groß sind. Ein solcher erfindungsgemäßer Gleitfolienstapel ist zum Verwenden bei einem erfindungsgemäßen Verfahren zum Herstellen einer erfindungsgemäßen Magnetbandkassette vorgesehen.

Bei dem erfindungsgemäßen Gleitfolienstapel hat sich als besonders vorteilhaft erwiesen, wenn die Differenz aus den Abständen zwischen mindestens zwei Erhebungen von zwei aneinander anliegenden Gleitfolien des Gleitfolienstapels im Bereich von 0,2 mm bis 0,6 mm liegt.

Ein erfindungsgemäßes Verfahren zum Herstellen eines Gleitfolienstapels ist dadurch gekennzeichnet, daß der Gleitfolienstapel durch Stapeln von einer Vielzahl von Gleitfolien gemäß mindestens zwei unterschiedlichen Folienvarianten hergestellt wird, welche Folienvarianten sich in den Abständen zwischen mindestens zwei Erhebungen voneinander unterscheiden, und daß das Stapeln der Gleitfolien in der Weise erfolgt, daß jeweils unmittelbar aneinander anliegende Gleitfolien des Gleitfolienstapels einer anderen Folienvariante entsprechen. Mit einem solchen erfindungsgemäßen Verfahren zum Herstellen eins Gleitfolienstapels ist auf einfache Weise ein erfindungsgemäßer Gleitfolienstapel herstellbar.

Bei einem erfindungsgemäßen Verfahren zum Herstellen eines Gleitfolienstapels, wobei eine Anzahl N von Folienbändern stapelartig übereinanderliegenden Prägestationen zugeführt und in den Prägestationen durch Prägevorgänge mit mindestens zwei mit einem Abstand voneinander angeordneten Erhebungen versehen werden, wonach die mit den Erhebungen versehenen Folienbänder stapelartig zusammengeführt und einer Stanzeinrichtung zugeleitet werden, in der schrittweise aufeinanderfolgend jeweils N Gleitfolien aus den N Folienbändern ausgestanzt werden, wonach die jeweils aufeinanderfolgend ausgestanzten Gleitfolien zu einem Gleitfolienstapel gestapelt werden, hat sich als vorteilhaft erwiesen, wenn in zwei unmittelbar benachbarten Prägestationen in die darin befindlichen, unmittelbar benachbarten Folienbänder je mindestens zwei Erhebungen geprägt werden, deren Abstände voneinander entsprechend den unterschiedlichen Folienvarianten unterschiedlich groß sind.

Hierbei hat sich als besonders vorteilhaft erwiesen, wenn in zwei unmittelbar benachbarten Prägestationen in die darin befindlichen, unmittelbar benachbarten Folienbänder je mindestens zwei Erhebungen geprägt werden, von denen die Differenz aus ihren gegenseitigen Abständen im Bereich von 0,2 mm bis 0,6 mm liegt.

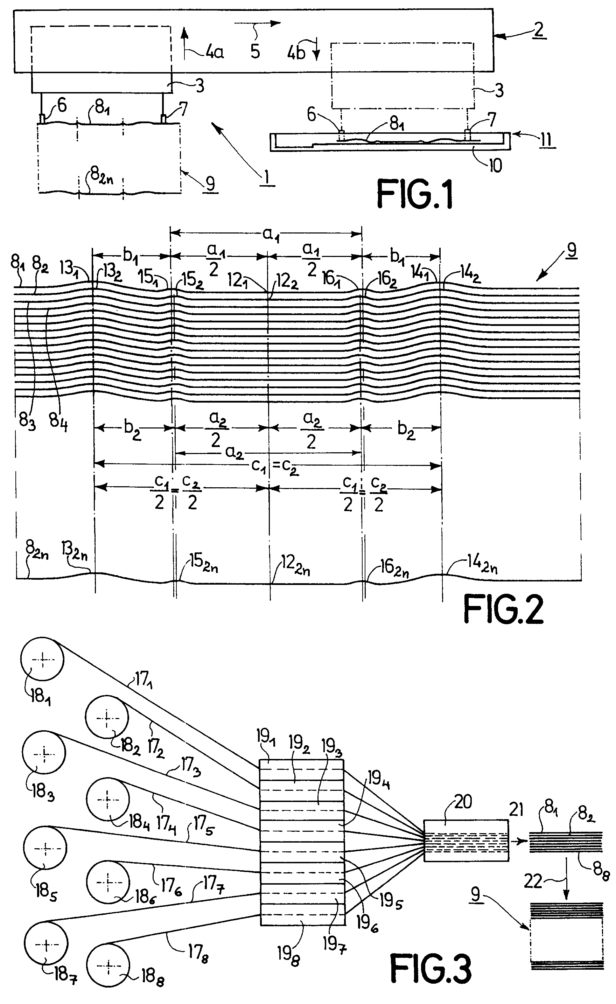

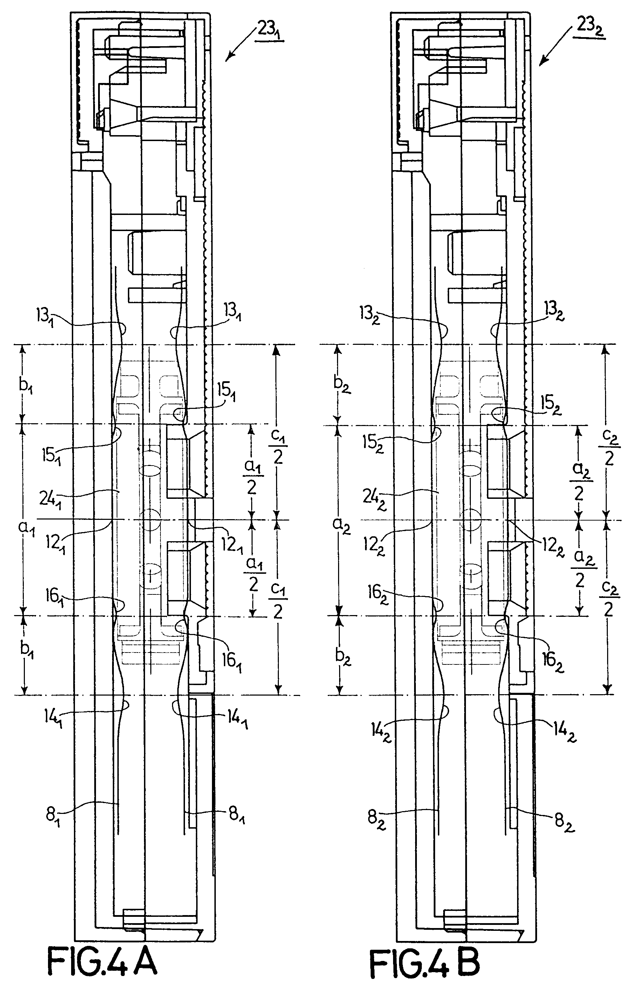

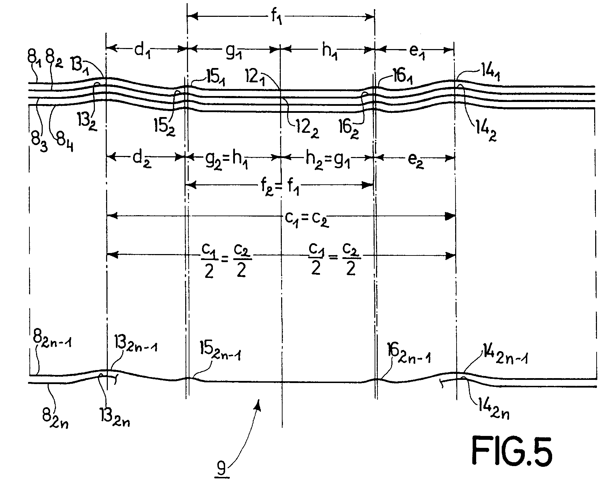

Die Erfindung wird im folgenden anhand von zwei in den Zeichnungen dargestellten Ausführungsbeispielen beschrieben, auf die die Erfindung aber nicht beschränkt sein soll. Die Fig. 1 zeigt auf schematische Weise einen Teil einer Montagevorrichtung, mit der die im Zusammenhang mit der Erfindung wesentlichen Verfahrensschritte eines erfindungsgemäßen Verfahrens zum Herstellen einer erfindungsgemäßen Magnetbandkassette durchführbar sind, bei dem eine Gleitfolie von einem erfindungsgemäßen Gleitfolienstapel vereinzelt und in eine Gehäusehälfte einer erfindungsgemäßen Magnetbandkassette eingesetzt wird. Die Fig. 2 zeigt auf schematische Weise in einem gegenüber der Fig. 1 größeren Maßstab einen erfindungsgemäßen Gleitfolienstapel gemäß einer ersten Ausführungsvariante zum Verwenden bei dem anhand der Fig. 1 beschriebenen erfindungsgemäßen Verfahren. Die Fig. 3 zeigt auf schematische Weise eine Vorrichtung zum Durchführen eines erfindungsgemäßen Verfahrens zum Herstellen des erfindungsgemäßen Gleitfoliestapels gemäß Fig. 2. Die Fig. 4 zeigt in einem gegenüber der natürlichen Größe größeren Maßstab im Teil A eine erfindungsgemäße Magnetbandkassette gemäß einer ersten Kassettenvariante und im Teil B eine erfindungsgemäße Magnetbandkassette gemäß einer zweiten Kassettenvariante, welche Magnetbandkassetten mit dem anhand der Fig.1 beschriebenen erfindungsgemäßen Verfahren zum Herstellen von Magnetbandkassetten hergestellt sind. Die Fig. 5 zeigt analog wie die Fig. 2 einen erfindungsgemäßen Gleitfolienstapel gemäß einer zweiten Ausführungsvariante.

Die Fig. 1 zeigt auf stark schematisierte Weise einen Teil einer Montagevorrichtung 1, die beispielsweise durch einen Montagerundtisch gebildet sein kann. In einer solchen Montagevorrichtung 1 werden in verschiedenen Arbeitsstationen aufeinanderfolgend Verfahrensschritte eines Verfahrens zum Herstellen einer Magnetbandkassette durchgeführt. Nachfolgend sind jene Verfahrensschritte eines solchen Verfahrens näher beschrieben, die im vorliegenden Zusammenhang von Wichtigkeit sind.

Die Montagevorrichtung 1 weist eine pneumatische Arbeitsstation 2 auf, in der ein zwischen einer in Fig. 1 mit vollen Linien dargestellten Vereinzelungsposition und einer in Fig. 1 mit strichpunktierten Linien dargestellten Einsetzposition verstellbarer Schlitten 3 vorgesehen ist. Die Verstellung des Schlittens 3 von dessen Vereinzelungsposition in dessen Einsetzposition erfolgt entsprechend der in Fig. 1 dargestellten Pfeile 4a, 5 und 4b. Mit dem Schlitten 3 sind vier Saugnäpfe verbunden, von denen in Fig. 1 zwei Saugnäpfe 6 und 7 sichtbar sind. Mit den Saugnäpfen 6 und 7 ist in der Vereinzelungsposition des Schlittens 3 die oberste Gleitfolie 8 eines aus einer Vielzahl von Gleitfolien $8_1$, $8_2$, $8_3$, $8_4$, ..... $8_{2n}$ bestehenden, in Fig. 2 in größerem Maßstab schematisch dargestellten Gleitfolienstapels 9 von dem Gleitfolienstapel 9 abhebbar, also von dem Gleitfolienstapel 9 vereinzelbar. Durch Verstellen des Schlittens 3 in seine Einsetzposition wird die zuvor vereinzelte Gleitfolie 8 in eine zuvor der Arbeitsstation 2 zugeführte Gehäusehälfte 10 des Gehäuses 11 einer Magnetbandkassette eingesetzt. Die Gleitfolie 8 ist zum Führen eines auf mindestens einen Wickelkern der Magnetbandkassette aufwickelbaren Magnetbandes vorgesehen, worauf nachfolgend noch anhand der Fig. 4 eingegangen ist. Bei einem mit der Montagevorrichtung 1 durchgeführten Verfahren zum Herstellen einer Magnetbandkassette wird somit neben einer Vielzahl anderer Verfahrensschritte, auf die hier aber der Einfachheit halber nicht eingangen ist, eine Gleitfolie 8 von einem aus einer Vielzahl von Gleitfolien $8_1$, $8_2$, $8_3$, $8_4$, ... $8_{2n}$ bestehenden Gleitfolienstapels 9 vereinzelt und in eine Gehäusehälfte 10 des Gehäuses 11 einer Magnetbandkassette eingesetzt.

Wie aus Fig. 2 ersichtlich ist, weist bei dem Gleitfolienstapel 9 jede Gleitfolie $8_1$, $8_2$, ... $8_{2n}$ vier zu einer Längssymmetrielinie $12_1$, $12_2$, ... $12_{2n}$ parallel verlaufende geradlinig ausgebildete rinnen- bzw. gewölbeartige Erhebungen $13_1$, $14_1$, $15_1$, $16_1$ bzw. $13_2$, $14_2$, $15_2$, $16_2$, ... $13_{2n}$, $14_{2n}$, $15_{2n}$, $16_{2n}$ auf. Hierbei sind die beiden Erhebungen $15_1$ und $16_1$ sowie $15_3$ und $16_3$ usw. bzw. $15_2$ und $16_2$ sowie $15_4$ und $16_4$ usw. in einem Abstand $a_1$ bzw. $a_2$ voneinander vorgesehen. Die beiden Abstände $a_1$ und $a_2$ sind unterschiedlich groß. Die Erhebungen $13_1$ und $15_1$ sowie $13_3$ und $15_3$ usw. bzw. $13_2$ und $15_2$ sowie $13_4$ und $15_4$ usw. sind in einem Abstand $b_1$ bzw. $b_2$ voneinander vorgesehen. Die

beiden Abstände $b_1$ und $b_2$ sind ebenfalls unterschiedlich groß. Die Erhebungen $16_1$ und $14_1$ sowie $16_3$- und $14_3$ usw. bzw. $16_2$ und $14_2$ sowie $16_4$ und $14_4$ usw. sind ebenfalls in einem Abstand $b_1$ bzw. $b_2$ voneinander vorgesehen. Wie aus Fig. 2 ersichtlich ist, besteht daher der Gleitfolienstapel 9 aus Gleitfolien $8_1$, $8_2$, $8_3$, $8_4$, ... $8_{2n}$ gemäß zwei unterschiedlichen Folienvarianten, welche Folienvarianten sich in den Abständen $a_1$, $a_2$, $b_1$, $b_2$ zwischen vier Erhebungen $13_1$, $14_1$, $15_1$, $16_1$, $13_2$, $14_2$, $15_2$, $16_2$, ... $13_{2n}$, $14_{2n}$, $15_{2n}$, $16_{2n}$ voneinander unterscheiden, wobei die gegenseitigen Abstände $a_1$, $b_1$, $a_2$, $b_2$ der Erhebungen $13_1$, $14_1$, $15_1$, $16_1$, bzw. $13_2$, $14_2$, $15_2$, $16_2$ usw. von zwei aneinander anliegenden Gleitfolien $8_1$ bzw. $8_2$ usw. des Gleitfolienstapels 9 entsprechend zwei unterschiedlichen Folienvarianten unterschiedlich groß sind. Die obersten Gleitfolien $8_1$, $8_2$, usw. des Gleitfolienstapels 9 liegen beispielsweise nur im Bereich der abstandsmäßig zueinander versetzten Erhebungen $15_1$ und $16_1$ sowie und $15_2$ und $16_2$ usw. praktisch punktweise aneinander an, wogegen sie in ihren übrigen Bereichen einen geringen Abstand voneinander aufweisen, und zwar deshalb, weil die abstandsmäßig zueinander versetzten Erhebungen eine Federwirkung ausüben, durch die ein geringfügiges Abheben der obersten Gleitfolien $8_1$, $8_2$, usw. voneinander erhalten wird. Die weiter unten liegenden Gleitfolien des Gleitfolienstapels 9 liegen durch die Gewichtsbelastung von den darüberliegenden Gleitfolien praktisch gänzlich aneinander an, ohne daß aber eine ungünstige Deformierung der Erhebungen erfolgt. Die vorstehend beschriebenen Abstandsverhältnisse in Richtung der Stapelhöhe des Gleitfolienstapels 9 sind der Übersichtlichkeit der Zeichnung halber in Fig. 2 nicht dargestellt.

Bei dem Verfahren zum Herstellen einer Magnetbandkassette, wie dies teilweise anhand der Fig. 1 beschrieben ist, wird jede Gleitfolie $8_1$, $8_2$, $8_3$, $8_4$, ... $8_{2n}$ von einem Gleitfolienstapel 9 vereinzelt, der aus Gleitfolien $8_1$, $8_2$, $8_3$, $8_4$, ... $8_{2n}$ gemäß zwei unterschiedlichen Folienvarianten besteht, welche Folienvarianten sich in den Abständen $a_1$, $b_1$ bzw. $a_2$, $b_2$ zwischen ihren Erhebungen $13_1$, $14_1$, $15_1$, $16_1$, bzw. $13_2$, $14_2$, $15_2$, $16_2$... $13_{2n}$, $14_{2n}$, $15_{2n}$, $16_{2n}$ voneinander unterscheiden, und bei dem die Abstände $a_1$, $b_1$, $a_2$, $b_2$ zwischen den Erhebungen $13_1$, $14_1$, $15_1$, $16_1$, bzw. $13_2$, $14_2$, $15_2$, $16_2$, ... $13_{2n}$, $14_{2n}$, $15_{2n}$, $16_{2n}$ von zwei aneinander anliegenden Gleitfolien $8_1$ bzw. $8_2$ usw. des Gleitfolienstapels 9 entsprechend zwei unterschiedlichen Folienvarianten unterschiedlich groß sind. Dadurch, daß zwischen den jeweils obersten Gleitfolien des Gleitfolienstapels 9 stets ein gewisser Abstand vorliegt, der durch die Federwirkung der abstandsmäßig zueinander versetzten Erhebungen erhalten wird, ist stets ein einwandfreies Vereinzeln der jeweils obersten Gleitfolie gewährleistet.

Es bleibt zu erwähnen, daß bei dem Verfahren zum Herstellen einer Magnetbandkassette auch in die zweite Gehäusehälfte des Gehäuses 11 der Magnetbandkassette eine Gleitfolie eingesetzt wird. Diese zweite Gehäusehälfte wird samt der darin befindlichen Gleitfolie auf die erste Gehäusehälfte 10 beim Zusammenbau der Magnetbandkassette aufgesetzt, wobei die in dieser zweiten Gehäusehälfte befindliche Gleitfolie beispielsweise durch eine statische Ladung in dieser zweiten Gehäusehälfte festgehalten wird.

Bei einer praktischen Ausführung eines Gleitfolienstapels 9 gemäß Fig. 2 weisen die Erhebungen $15_1$ und $16_1$ sowie $15_3$ und $16_3$ usw. einen gegenseitigen Abstand $a_1$, von 13,2 mm voneinander auf. Die Erhebungen $15_2$ und $16_2$ sowie $15_4$ und $16_4$ usw. weisen einen gegenseitigen Abstand $a_2$ von 12,8 mm voneinander auf. Die Differenz aus den Abständen $a_1$ und $a_2$ zwischen zwei Erhebungen $15_1$, $16_1$ und $15_2$, $16_2$ usw. von zwei aneinander anliegenden Gleitfolien $8_1$ und $8_2$ usw. weist daher einen Wert von 0,4 mm auf. Die Abstände $b_1$ zwischen den Erhebungen $13_1$ und $15_1$ bzw. $16_1$ und $14_1$ sowie $13_3$ und $15_3$ bzw. $16_3$ und $14_3$ usw. der Gleitfolien $8_1$, $8_3$ usw. sind gleich groß und weisen einen Wert von 5,4 mm auf. Die Abstände $b_2$ zwischen den Erhebungen $13_2$ und $15_2$ bzw. $16_2$ und $14_2$ sowie $13_4$ und $15_4$ bzw. $16_4$ und $14_4$ usw. der Gleitfolien $8_2$, $8_4$ usw. sind ebenfalls gleich groß und weisen einen Wert von 5,6 mm auf. Infolge dieser Größenwerte der Abstände $a_1$ und $b_1$ bzw. $a_2$ und $b_2$ ergibt sich, daß die Abstände $c_1$ und $c_2$ zwischen den Erhebungen $13_1$ und $14_1$, $13_3$ und $14_3$ usw. bzw. $13_2$ und $14_2$, $13_4$ und $14_4$ usw. der Gleitfolien $8_1$, $8_3$ usw. und $8_2$, $8_4$ usw. gleich groß sind und einen Wert von 24,0 mm aufweisen. Erwähnt sei noch, daß die Abstände $a_1$ und $a_2$ und daher auch die Abstände $c_1$ und $c_2$ von den Längssymmetrielinien $12_1$ und $12_2$ in zwei gleich große Abstandshälften $a_1/2$, $a_2/2$, $c_1/2$ und $c_2/2$ geteilt sind. Der höchste Punkt der Erhebungen $15_1$, $16_1$, $15_2$, $16_2$ usw. liegt etwa 0,2 mm über dem Niveaubereich der Gleitfolien $8_1$, $8_2$ usw., den sie in ihrem Bereich mit den Längssymmetrielinien $12_1$, $12_2$ usw. aufweisen. Der höchste Punkt der Erhebungen $13_1$, $14_1$, $13_2$, $14_2$ usw. liegt etwa 0,7 mm über dem Niveaubereich der Gleitfolien $8_1$, $8_2$ usw., den sie in ihrem Bereich mit den Längssymmetrielinien $12_1$, $12_2$ usw. aufweisen. Durch die abstandsmäßig versetzte Anordnung der Erhebungen von jeweils zwei aneinander anliegenden Gleitfolien des Gleitfolienstapels wird mit Hilfe dieser Erhebungen ein Federeffekt erhalten, durch den zumindest die oberste Gleitfolie von der darunterliegenden Gleitfolie etwas abgehoben wird, so daß ein stets einwandfreies Vereinzeln der obersten Gleitfolie von dem Gleitfolienstapel gewährleistet ist und folglich bei dem Verfahren zum Herstellen einer Magnetbandkassette stets nur eine einzige Gleitfolie in eine Gehäusehälfte des Gehäuses einer Magnetbandkassette eingesetzt wird, so daß eine durch Einsetzen von mehr als nur einer erwünschten Gleitfolie fehlerhafte Kassettenherstellung praktisch mit Sicherheit vermieden ist.

Anhand der Fig. 3 wird nachfolgend ein Verfahren zum Herstellen eines Gleitfolienstapels 9 gemäß Fig. 2 beschrieben. Bei diesem Verfahren werden eine Vielzahl von Gleitfolien $8_1$, $8_2$ usw. mit vier je mit einem Abstand $a_1$ und $b_1$ bzw. $a_2$ und $b_2$ voneinander angeordneten Erhebungen $13_1$, $14_1$, $15_1$, $16_1$ und $13_2$, $14_2$, $15_2$, $16_2$ usw. hergestellt und wird durch Stapeln dieser Gleitfolien $8_1$, $8_2$ usw. der Gleitfolienstapel 9 hergestellt. Hierbei wird der Gleitfolienstapel 9 durch Stapeln von einer Vielzahl von Gleitfolien $8_1$, $8_2$ usw. gemäß zwei unterschiedlichen Folienvarianten hergestellt, welche Folienvarianten sich in den Abständen $a_1$, $b_1$ und $a_2$, $b_2$ zwischen den vier Erhebungen $13_1$, $14_1$, $15_1$, $16_1$ bzw. $13_2$, $14_2$, $15_2$, $16_2$ usw. voneinander unterscheiden, und bei dem das Stapeln der Gleitfolien $8_1$, $8_2$ usw. in der Weise erfolgt, daß jeweils unmittelbar aneinander anliegende Gleitfolie $8_1$, $8_2$ usw. des Gleitfolienstapels 9 einer anderen Folienvariante entsprechen.

Wie in Fig. 3 schematisch dargestellt ist, werden eine Anzahl N, wobei die Anzahl N eine gerade Zahl, nämlich 8 ist, von Folienbändern $17_1$, $17_2$, $17_3$, $17_4$, $17_5$, $17_6$, $17_7$ und $17_8$, die je von einem Folienbandwickel $18_1$, $18_2$, $18_3$, $18_4$, $18_5$, $18_6$, $18_7$ und $18_8$ abgewickelt werden, stapelartig übereinanderliegenden Prägestationen $19_1$, $19_2$, $19_3$, $19_4$, $19_5$, $19_6$, $19_7$ und $19_8$ zugeführt. In den Prägestationen $19_1$ bis $19_8$ werden die Folienbänder durch Prägevorgänge mit den vier je mit einem Abstand $a_1$, und $b_1$ bzw. $a_2$ und $b_2$ voneinander angeordneten Erhebungen versehen, deren gegenseitige Abstände $a_1$ und $b_1$ bzw. $a_2$ und $b_2$ entsprechend den beiden unterschiedlichen Folienvarianten unterschiedlich groß sind. Danach werden die mit den Erhebungen $13_1$, $14_1$, $15_1$ und $16_1$ bzw. $13_2$, $14_2$, $15_2$ und $16_2$ versehenen Folienbänder $17_1$, $17_2$ bis $17_8$ stapelartig zusammengeführt und einer Stanzeinrichtung 20 zugeleitet. In der Stanzeinrichtung 20 werden schrittweise aufeinanderfolgend jeweils N, also 8, Gleitfolien aus den N, also 8, Folienbändern $17_1$, $17_2$ bis $17_8$ ausgestanzt. Die schrittweise aufeinanderfolgend ausgestanzten jeweils acht Gleitfolien $8_1$, $8_2$ bis $8_8$ werden in Richtung eines Pfeiles 21 aus der Stanzeinrichtung 20 herausgeführt und schließlich in Richtung eines Pfeiles 22 einem Gleitfolienstapel 9 zugeführt und auf diese Weise zu einem Gleitfolienstapel 9 gestapelt. Mit einem solchen Verfahren ist ein Gleitfolienstapel 9 gemäß Fig. 2 auf besonders einfache Weise herstellbar, weil es hierfür lediglich erforderlich ist, in jeweils zwei benachbarten Folienbändern abstandsmäßig versetzte Erhebungen einzuprägen.

In der Fig. 4 ist eine erfindungsgemäße Magnetbandkassette $23_1$ bzw. $23_2$ dargestellt, wie diese mit einem anhand der Fig. 1 beschriebenen Verfahren und unter Verwendung eines in der Fig. 2 dargestellten Gleitfolienstapels 9 herstellbar ist. Im Teil A der Fig. 4 ist eine Magnetbandkassette $23_1$, gemäß einer ersten Kassettenvariante und im Teil B ist eine Magnetbandkassette $23_2$ gemäß einer zweiten Kassettenvariante dargestellt. Die erste Kassettenvariante $23_1$ weist zwei Gleitfolien $8_1$ gemäß" einer ersten Folienvariante mit vier Erhebungen $13_1$, $14_1$, $15_1$ und $16_1$ auf, welche Erhebungen voneinander die Abstände $a_1$ und $b_1$ aufweisen. Die zweite Kassettenvariante $23_2$ gemäß dem Teil B der Fig. 4 weist zwei Gleitfolien $8_2$ gemäß einer zweiten Folienvariante mit vier Erhebungen $13_2$, $14_2$, $15_2$ und $16_2$ auf, welche Erhebungen voneinander die Abstände $a_2$ und $b_2$ voneinander aufweisen.

In der Fig. 4 ist weder bei der Magnetbandkassette $23_1$ gemäß der ersten Kassettenvariante noch bei der Magnetbandkassette $23_2$ gemäß der zweiten Kassettenvariante das Magnetband dargestellt. Gezeigt ist aber ein Wickelkern $24_1$ bzw. $24_2$. Jede Magnetbandkassette $23_1$ bzw. $23_2$ enthält zwei solche Wickelkerne $24_1$ bzw. $24_2$, die in Richtung der Längssymmetrielinien $12_1$ bzw. $12_2$ der Gleitfolien $8_1$ bzw. $8_2$ hintereinander liegend und bezüglich dieser Längssymmetrielinie $12_1$ bzw. $12_2$ spiegelsymmetrisch angeordnet sind. Jeder der beiden Wickelkerne $24_1$ bzw. $24_2$ wirkt mit den parallel zu den Längssymmetrielinien $12_1$ und $12_2$ verlaufenden rinnen- bzw. gewölbeartigen Erhebungen $15_1$ und $16_1$ bzw. $15_2$ und $16_2$ der Gleitfolien $8_1$ bzw. $8_2$ zusammen, wobei diese Erhebungen $15_1$ und $16_1$ bzw. $15_2$ und $16_2$ für eine exakte axiale Positionierung der Wickelkerne $24_1$ bzw. $24_2$ sorgen. Auf die Wickelkerne $24_1$ bzw. $24_2$ ist das in Fig. 4 nicht dargestellte Magnetband aufwickelbar, wobei bei einem Umspulen von einem Wickelkern $24_1$ bzw. $24_2$ zum anderen Wickelkern $24_1$ bzw. $24_2$ die Band-kanten des Magnetbandes von den beiden Gleitfolien $8_1$ bzw. $8_2$ der Magnetbandkassette $23_1$ bzw. $23_2$ im Bereich von den parallel zu den Längssymmetrielinien $12_1$ bzw. $12_2$ verlaufenden rinnen- bzw. gewölbeartigen Erhebungen $13_1$ und $14_1$ bzw. $13_2$ und $14_2$ geführt wird, da diese Erhebungen $13_1$ und $14_1$ bzw. $13_2$ und $14_2$ einen leichten Druck auf die beiden Bandkanten des Magnetbandes ausüben.

Die Fig. 5 zeigt einen Gleitfolienstapel 9 gemäß einer zweiten Ausführungsvariante. Die Gleitfolien $8_1$, $8_2$, $8_3$, $8_4$, ... $8_n$ weisen auch bei dem Gleitfolienstapel 9 gemäß Fig. 5 vier Erhebungen $13_1$, $14_1$, $15_1$ und $16_1$ bzw. $13_2$, $14_2$, $15_2$ und $16_2$ bzw. $13_{2n}$, $14_{2n}$, $14_{2n}$ und $16_{2n}$ auf. Bei diesem Gleitfolienstapel 9 liegen die Erhebungen $15_1$, $15_3$ usw.

der Gleitfolien $8_1$, $8_3$ usw. in einem Abstand $g_1$ von der Längssymmetrielinie $12_1$, $12_3$ usw. und die Erhebungen $16_1$, $16_3$ usw. in einem Abstand $h_1$, von der Längssymmetrielinie $12_1$, $12_3$ usw. Die Erhebungen $15_2$, $15_4$ usw. der Gleitfolie $8_2$, $8_4$ liegen in einem Abstand $g_2 = h_1$ von der Längssymmetrielinie $12_2$, $12_4$ usw. Die Erhebungen $16_2$, $16_4$ usw. weisen von der Längssymmetrielinie $12_2$, $12_4$ usw. einen Abstand $h_2 = g_1$ auf. Somit weisen die Erhebungen $15_1$ und $16_1$, $15_3$ und $16_3$ usw. einen Abstand $f_1$ und die Erhebungen $15_2$ und $16_2$, $15_4$ und $16_4$ usw. einen Abstand $f_2 = f_1$ voneinander auf, dies heißt mit anderen Worten, daß die Abstände zwischen den Erhebungen $15_1$ und $16_1$, $15_3$ und $16_3$ usw. bzw. $15_2$ und $16_2$, $15_4$ und $16_4$ usw. bei den Gleitfolien $8_1$, $8_2$ bis $8_{2n}$ des Gleitfolienstapels 9 gemäß Fig 5 gleich groß sind. Jedoch sind die Abstände $d_1$ bzw. $d_2$ zwischen den beiden Erhebungen $13_1$ und $15_1$, $13_3$ und $15_3$ usw. bzw. $13_2$ und $15_2$, $13_4$ und $15_4$ usw. und auch die Abstände $e_1$ bzw. $e_2$ zwischen den beiden Erhebungen $14_1$ und $16_1$, $14_3$ und $16_3$ usw. bzw. $14_2$ und $16_2$, $14_4$ und $16_4$ usw. unterschiedlich groß. Die Abstände $c_1$ bzw. $c_2$ zwischen den Erhebungen $13_1$ und $14_1$, $13_3$ und $14_3$ usw. bzw. $13_2$ und $14_2$, $13_4$ und $14_4$ usw. sind gleich groß, und diese beiden gleich großen Abstände $c_1$ und $c_2$ werden von der jeweiligen Längssymmetrielinie $12_1$, $12_3$ usw. bzw. $12_2$, $12_4$ usw. in zwei gleich große Abstandshälften $c_1/2$ und $c_2/2$ geteilt.

Auch bei der Verwendung eines Gleitfolienstapels 9 gemäß Fig. 5 bei einem Verfahren zum Herstellen einer Magnetbandkassette, wie dies anhand der Fig. 1 beschrieben wurde, ist durch die abstandsmäßig versetzte Anordnung der Erhebungen $13_1$, $14_1$, $15_1$ und $16_1$ bzw. $13_2$, $14_2$, $15_2$ und $16_2$ bis $13_{2n}$, $14_{2n}$, $15_{2n}$ und $16_{2n}$ erreicht, daß mit Hilfe dieser Erhebungen ein Federeffekt erhalten wird, durch den zumindest die oberste Gleitfolie von der darunterliegenden Gleitfolie etwas abgehoben wird, so daß ein stets einwandfreies Vereinzeln der obersten Gleitfolie von dem Gleitfolienstapel gewährleistet ist und folglich bei einem Verfahren zum Herstellen einer Magnetbandkassette eine durch Einsetzen von mehr als nur einer erwünschten Gleitfolie fehlerhafte Kassettenherstellung vermieden ist.

Die Erfindung ist nicht auf die beiden vorstehend beschriebenen Ausführungsbeispiele beschränkt Ein Gleitfolienstapel kann auch aus drei oder mehreren Folienvarianten bestehen. Dementsprechend kann eine Magnetbandkassette auch gemäß drei oder mehreren Kassettenvarianten ausgebildet sein. Auch kann eine Magnetebandkassette gemäß einer Kassettenvariante zwei unterschiedliche Folienvarianten enthalten. Als abstandsmäßig zueinander versetzte Erhebungen können auch anstelle von geradlinigen rinnen- bzw. gewölbeartig ausgebildeten Erhebungen andersförmig ausgebildete Erhebungen vorgesehen sein, beispielsweise kuppelförmige Erhebungen oder auch rinnen- bzw. gewölbeartige Erhebungen mit einem kreisringsektorförmigen Verlauf.

**Patentansprüche**

1. Verfahren zum Herstellen einer Magnetbandkassette, wobei in mindestens einen Gehäuseteil des Gehäuses der Magnetbandkassette eine zum Führen eines auf mindestens einen Wickelkern der Magnetbandkassette aufwickelbaren Magnetbandes vorgesehene Gleitfolie eingesetzt wird, die von einem aus einer Vielzahl von Gleitfolien bestehenden Gleitfolienstapel vereinzelt wird und die mindestens zwei mit einem Abstand voneinander angeordnete Erhebungen aufweist, dadurch gekennzeichnet, daß die Gleitfolie von einem Gleitfolienstapel vereinzelt wird, der aus Gleitfolien gemäß mindestens zwei unterschiedlichen Folienvarianten besteht, welche Folienvarianten sich in den Abständen zwischen mindestens zwei Erhebungen voneinander unterscheiden, und bei dem die Abstände zwischen mindestens zwei Erhebungen von zwei aneinander anliegenden Gleitfolien des Gleitfolienstapels entsprechend zwei unterschiedlichen Folienvarianten unterschiedlich groß sind.

2. Verfahren nach Anspruch 1, dadurch gekennzeichnet, daß die Gleitfolie von einem Gleitfolienstapel vereinzelt wird, bei dem die Differenz aus den Abständen zwischen mindestens zwei Erhebungen von zwei aneinander anliegenden Gleitfolien des Gleitfolienstapels im Bereich von 0,2 mm bis 0,6 mm liegt.

3. Magnetbandkassette, die mindestens eine von einem aus einer Vielzahl von Gleitfolien bestehenden Gleitfolienstapel vereinzelte Gleitfolie aufweist, die mindesens zwei mit einem Abstand voneinander angeordnete Erhebungen aufweist, dadurch gekennzeichnet, daß jede Gleitfolie von einem Gleitfolienstapel vereinzelt ist, der aus Gleitfolien gemäß mindestens zwei unterschiedlichen Folienvarianten besteht, welche Folienvarianten sich in den Abständen zwischen mindestens zwei Erhebungen voneinander unterscheiden, und bei dem die Abstände zwischen mindestens zwei Erhebungen von zwei aneinander anliegenden Gleitfolien des Gleitfolienstapels entsprechend zwei unterschiedlichen Folienvarianten unterschiedlich groß sind, und daß die Magnetbandkassette gemäß mindestens zwei unterschiedlichen Kassettenvarianten ausgebildet ist, von denen eine Kassettenvariante mindestens eine Gleitfolie mit mindestens zwei Erhebungen mit einem vorgegebenen Abstand und von denen eine andere Kassettenvariante mindestens eine Gleitfolie mit mindestens zwei Erhebungen mit einem zu dem einen Abstand unterschiedlichen anderen vorgegebenen Abstand aufweist.

4. Magnetbandkassette nach Anspruch 3, dadurch gekennzeichnet, daß die Differenz aus den Abständen zwischen mindestens zwei Erhebungen der Gleitfolie einer Kassettenvariante und der Gleitfolie der anderen Kassettenvariante im Bereich von 0,2 mm bis 0,6 mm liegt.

5. Gleitfolienstapel, der aus einer Vielzahl von Gleitfolien besteht, von denen jede Gleitfolie mindestens zwei mit einem Abstand voneinander angeordnete Erhebungen aufweist, dadurch gekennzeichnet, daß der Gleitfolienstapel aus Gleitfolien gemäß mindestens zwei unterschiedlichen Folienvarianten besteht, welche Folienvarianten sich in den Abständen zwischen mindestens zwei Erhebungen voneinander unterscheiden, und daß die Abstände zwischen mindestens zwei Erhebungen von zwei aneinander anliegenden Gleitfolien des Gleitfolienstapels entsprechend zwei unterschiedlichen Folienvarianten unterschiedlich groß sind.

6. Gleitfolienstapel nach Anspruch 5, dadurch gekennzeichnet, daß die Differenz aus den Abständen zwischen mindestens zwei Erhebungen von zwei aneinander anliegenden Gleitfolien da Gleitfolienstapels im Bereich von 0,2 mm bis 0,6 mm liegt.

7. Verfahren zum Herstellen eines Gleitfolienstapels, wobei eine Vielzahl von Gleitfolien mit mindestens zwei mit einem Abstand voneinander angeordneten Erhebungen hergestellt werden und durch Stapeln dieser Gleitfolien der Gleitfolienstapel hergestellt wird, dadurch gekennzeichnet, daß der Gleitfolienstapel durch Stapeln von einer Vielzahl von Gleitfolien gemäß mindestens zwei unterschiedlichen Folienvarianten hergestellt wird, welche Folienvarianten sich in den Abständen zwischen mindestens zwei Erhebungen voneinander unterscheiden, und daß das Stapeln der Gleitfolien in der Weise erfolgt, daß jeweils unmittelbar aneinander anliegende Gleitfolien des Gleitfolienstapels einer anderen Folienvariante entsprechen.

8. Verfahren nach Anspruch 7, wobei eine Anzahl N von Folienbändern stapelartig übereinanderliegenden Prägestationen zugeführt und in den Prägestationen durch Prägevorgänge mit mindestens zwei mit einem Abstand voneinander angeordneten Erhebungen versehen werden, wonach die mit den Erhebungen versehenen Folienbänder stapelartig zusammengeführt und einer Stanzeinrichtung zugeleitet werden, in der schrittweise aufeinanderfolgend jeweils N Gleitfolien aus den N Folienbändern ausgestanzt werden, wonach die jeweils aufeinanderfolgend ausgestanzten Gleitfolien zu einem Gleitfolienstapel gestapelt werden, dadurch gekennzeichnet, daß in zwei unmittelbar benachbarten Prägestationen in die darin befindlichen, unmittelbar benachbarten Folienbänder je mindestens zwei Erhebungen geprägt werden, deren Abstände voneinander entsprechend den unterschiedlichen Folienvarianten unterschiedlich groß sind.

9. Verfahren nach Anspruch 8, dadurch gekennzeichnet, daß in zwei unmittelbar benachbarten Prägestationen in die darin befindlichen, unmittelbar benachbarten Folienbänder je mindestens zwei Erhebungen geprägt werden, von denen die Differenz aus ihren gegenseitigen Abständen im Bereich von 0,2 mm bis 0,6 mm liegt.

**FIG.1**

**FIG.2**

**FIG.3**

FIG.4 A

FIG.4 B

FIG.5